# EUROPEAN PATENT SPECIFICATION

(11) **EP 3 448 172 B1**
(45) Date of publication and mention of the grant of the patent: **31.07.2019**
(21) Application number: 17717431.5
(22) Date of filing: 13.04.2017
(51) Int. Cl.: A23L 23/10, A23L 27/00, A23P 30/20

(54) **SHAPED SAVOURY CONCENTRATE AND PROCESS FOR THE PREPARATION THEREOF**
GEFORMTES HERZHAFTES KONZENTRAT UND VERFAHREN ZUR HERSTELLUNG DAVON
CONCENTRÉ SAVOUREUX FAÇONNÉ ET SON PROCÉDÉ DE PRÉPARATION

(30) Priority: 26.04.2016 EP 16167156
(43) Date of publication of application: 06.03.2019
(73) Proprietor: Unilever N.V., 3013 AL Rotterdam (NL); Unilever PLC, London, Greater London EC4Y 0DY (GB)
(72) Inventor: ARNAUDOV, Luben, Nikolaev, 3133 AT Vlaardingen (NL); BLIJDENSTEIN, Theodorus, Berend, Jan, 3133 AT Vlaardingen (NL); STOYANOV, Simeon, 3133 AT Vlaardingen (NL)
(74) Representative: Tjon, Hon Kong Guno
(86) International application number: PCT/EP2017/058992
(87) International publication number: WO 2017/186514

(56) References cited:
- EP-A1- 1 820 409
- EP-B1- 2 091 359
- WO-A1-03/003858
- WO-A1-2004/049831
- WO-A1-2008/086918
- US-A- 6 099 888

## Description

### Field of the invention

The invention relates to a process of preparing a shaped savoury concentrate having a water activity of less than 0.8 and a total fat content of 10-35 wt.%, said process comprising:
a) mixing the following ingredients to prepare a fat containing powder mixture:
   - edible salt selected from sodium chloride, potassium chloride and combinations thereof,
   - one or more particulate ingredients selected from sugars, glutamate, flour, starch, plant pieces and combinations thereof, and
   - liquid or molten fat, said fat comprising at least 30 wt.% of vegetable oil;
b) mixing the fat containing powder mixture with an edible polar liquid to produce a paste;
c) optionally mixing the paste with edible components selected from fat, garnish and combinations thereof; and
d) forming the paste into shaped articles by means of extrusion.

The preparation process of the present invention enables the manufacture of shaped savoury concentrates without protracted holding times. Furthermore, the process enables the preparation of shaped savoury concentrates using less high melting fat.

The invention also relates to an extruded savoury concentrate having a water activity of less than 0.8 and comprising:
- 30-80 wt.% of edible salt selected from sodium chloride, potassium chloride and combinations thereof;
- 2.4-50 wt.% of one or more particulate ingredients selected from sugars, glutamate, flour, starch, plant pieces and combinations thereof;
- 0.1-8 wt.% of polar fluid selected from water, liquid polyols, ethanol and combinations thereof;
- 10-35 wt.% of fat, said fat comprising at least 30 wt.% of vegetable oil;
- 0-5 wt.% of maltodextrin;
wherein the combination of the edible salt and the one or more particulate ingredients constitutes at least 60 wt.% of the savoury concentrate, and wherein cubes of the savoury concentrate with dimensions 11x24x28 mm retain shape when placed in a hot air circulation oven at 125°C for 3 minutes.

The savoury concentrate of the present invention can suitably be used in the preparation of bouillons, soups, sauces and gravies to provide taste and thickness in the final product. The concentrate can also be applied as a seasoning or a condiment on meal components. Bouillon cubes are a well-known example of a shaped savoury concentrate.

### Background of the invention

Bouillon or seasoning cubes are widely used as a concentrate to prepare bouillon, broths, soups, sauces and gravies. In the preparation of these foodstuffs, bouillon cubes are usually added to a hot aqueous liquid to disperse and dissolve the bouillon cubes. Bouillon cubes are also used as a seasoning. Seasoning cubes are usually added to a dish or food by crumbling.

A typical bouillon cube comprises salts, taste enhancing compounds like monosodium glutamate and/or yeast extract, sugars, starch, flour, fat, herbs, spices, meat extracts and colorants. The amounts of the respective ingredients may vary, depending on the specific purpose of the product and local preferences.

WO 2009/074442 describes a process to prepare seasoning cubes, the cubes comprising:
- at least 35 wt.% crystalline ingredients comprising at least one of salt, monosodium glutamate and sugar;
- at least 5 wt.% of non-crystalline ingredients comprising at least starch;
- at least 5 wt.% of at least one of the group of fat, liquid polyol and water;
the process comprising the steps of:
a) mixing at least part of the non-crystalline ingredients with at least one of the group of fat, liquid polyol and water;
b) granulating the product resulting from step a);
c) mixing of the product from step b) with at least part of the crystalline ingredients;
d) shaping the mixture resulting from step c) to cubes or tablets.

WO 2008/086918 describes a process to produce a particulate bouillon or seasoning concentrate, comprising at least the following steps:
a. preparing a mixture comprising at least two of the following components: salt monosodium glutamate, sugar, starch, and fat;
b. preparing particles from said mixture;
c. grinding said particles;
d. optionally sieving the particles.
The obtained particulate bouillon or seasoning concentrate flows well and provides good dosability.

WO 2013/064449 describes a shaped solid food concentrate comprising;
- 35-85% by weight crystalline ingredients composed of at least one of salt, monosodium glutamate and sugar;
- 0.1-10% by weight of gelatinized starch;
- 0.2-20% by weight water; and
- 0.5-50% by weight of taste imparting components.
The examples describe the preparation of chicken cubes containing salt (47.8%), sugar (18.9%), flavour mix (2%), sea yeast mix (19.5%), herbs (0.7%), flavour enhancer (0.4%), spices (0.7%), sunflower oil (1.2%), gelatinized starch (2.2-4.4%) and water (4.4-6.6%). These chicken cubes were prepared by:
a) preparing gelatinized starch;
b) mixing the dry ingredients and adding any liquid ingredients and fat
c) adding the gelatinizes starch;
d) adding the herbs and vegetable pieces;
e) shaping.

In general two types of bouillon cubes can be distinguished, i.e. the pressed and the extruded type. Pressed bouillon cubes are typically pressed from powder by a rotating press, resulting in a relatively hard and dense cube. In the pressed cube, the fat typically forms the dispersed phase. A specific form of pressing is roller compacting. In this technique the powder is pressed and compacted between two counter-rotating rolls.

Extruded bouillon cubes are typically prepared by extruding a pasty mass using commercially available machines from e.g. Corazza™ or Benhill™. Extruded cubes tend to be softer than pressed cubes and fat typically forms the continuous phase in these cubes. The fat content of extruded bouillon cubes is usually higher than the fat content of pressed bouillon cubes.

In order to shape a bouillon concentrate into a relatively quick dissolving stable cube by compression or extrusion, a binding agent usually needs to be employed. High melting fat is an ideal binding agent for extruded bouillon cubes because it can easily be dispersed throughout the concentrate in a molten state and it provides cohesion and structure to the pressed or extruded bouillon cube once it has solidified. Unfortunately, in the industrial production of bouillon cubes it usually takes at least several hours for molten fat in the bouillon concentrate mass to crystallize in a crystal-form and to an extent that enables the pressing or extrusion of stable bouillon cubes. In practice this means that bouillon concentrate that has been prepared at elevated temperature needs to be kept in a buffer container for several hours to allow the fat component to solidify.

US 6,099,888 describes a process for producing stock cubes, without an ageing time, by mixing ingredients comprising salt, fat, extract and, optionally, water and other additives, wherein mixing is performed by continuous addition of the ingredients into an extruder to make a mixture, continuously processing the mixture in the extruder which is cooled sufficiently to cause crystallization of the fat within the extruder, extruding the mixture through a shaping die to form a dimensionally stable extrudate having a density of 1.0-2.0 g/cm³. Food grade fats suitable for the process are those having a melting point in the range 32-51 °C.

The fat component employed in bouillon cubes usually is a high melting fat. High melting fat offers the advantage that it provides a high level of solid fat, i.e. structure, at ambient temperature. However, high melting fat has the disadvantage that it contains high levels of saturated fatty acids. From a health perspective it would be desirable if bouillon cubes, notably extruded bouillon cubes could be produced with less fat and/or with fat that contains less saturated fatty acids (SAFA).

WO 2004/049831 describes a hard bouillon and/or seasoning tablet or cube which comprises:
- in total tablet weight %:
   - from 1 to 10 % of liquid oil;
   - from 10 to 80 % of crystals;
   - up to 30 % of a filler;
   - from 1 to 20 % of a sticking agent; and
- in total liquid oil and solid fat weight %, up to 80 % or even 70 %, preferably up to 60 % or even 50 %, more preferably up to 40 % or even 30 %, even more preferably up to 20 % or even 10 %, and still even more preferably up to only 5 % solid fat; and
- as well as optionally spices, flavours, dehydrated vegetables, herb leafs and/or plant extracts.
The examples describe the preparation of hard tablets or cubes by tabletting.

EP 1,820,409 describes a bouillon and/or seasoning tablet which can be prepared by tabletting, which comprises, in total % in weight, 1-10% oil and/or 1-5% fat, binders, salt, between 2 and 3 % of total water, as well as optionally spices, flavors, dehydrated vegetables, herb leafs and/or plant extracts and between 0.5 and 8 % of vegetable or cereal fibers. The examples describe a bouillon or seasoning mass comprising high levels of maltodextrin (20-22 wt.%) as binder.

WO 2003/003858 describes a hard bouillon and/or seasoning tablet which comprises:
- in total tablet weight %:
   ∘ from 1 to 20% of an oil and possibly fat;
   ∘ up to 80% of a milled filler;
   ∘ up to 95% of a non-milled filler;
   ∘ from 4 to 35% of a stickening or sticking agent; and
- in total oil and fat weight %, up to 80% or even up to 70%, preferably up to 60% or even up to 50%, more preferably up to 40% or even up to 30%, even more preferably up to 20% or even up to 10%, and still even more preferably up to only 5% or even up to only 1% fat,
- as well as optionally spices, flavours, dehydrated vegetables, herb leafs and/or plant extracts.
The examples describe the preparation of hard tablets or cubes by tabletting and the use of maltodextrin (13-18 wt.%) as stickening agent.

In the prior art pressed cubes are described which comprise low levels of saturated fat, these pressed cubes typically comprise high levels of binders or stickening agents, such as maltodextrin, to bind the ingredients together. Such stickening agents cannot be applied in extruded bouillon cubes, as it is well-known that the presence of such stickening agents in the bouillon paste will make the bouillon paste too sticky, which will lead to blockage of the extruder.

### Summary of the invention

The inventors have unexpectedly discovered that it is possible to prepare shaped savoury concentrates by extrusion, using less fat or using fat having a low SAFA content, by first mixing edible salt, one or more particulate ingredients and liquid or molten fat to prepare a fat containing powder mixture, followed by mixing the fat containing powder mixture with edible polar liquid to produce a paste; and optionally mixing the paste with further edible components.

Although the inventors do not wish to be bound by theory, it is believed that by first mixing a substantial part of the particulate ingredients of the savoury concentrate with liquid oil, subsequently mixing the resulting fat containing powder mixture with polar liquid, said polar liquid is forced to form strong liquid bridges between the particles (edibles salt and other particulate ingredients) within the fat containing powder mixture, thereby dramatically decreasing the fluidity of the powder mixture, and thereafter optionally adding a hardstock. Thus, a shaped savoury concentrate can be prepared by extrusion, without using substantial quantities of high melting fat and without applying lengthy holding times to allow the high melting fat to solidify.

Accordingly, the present invention provides a process of preparing a shaped savoury concentrate having a water activity of less than 0.8, and a total fat content of 10-35 wt.%, said process comprising:
a) mixing the following ingredients to prepare a fat containing powder mixture:
   - 100 parts by weight of edible salt selected from sodium chloride, potassium chloride and combinations thereof,
   - 2-150 parts by weight of one or more particulate ingredients selected from sugars, glutamate, flour, starch, plant pieces and combinations thereof, and
   - 5-150 parts by weight of fat, said fat comprising at least 30 wt.% of vegetable oil and said fat being in a liquid state when it is combined with the edible salt and the one or more particulate ingredients;
b) mixing 100 parts by weight of the fat containing powder mixture with 0.2-10 parts by weight of edible polar liquid to produce a paste;
c) optionally mixing 100 parts by weight of the paste with 0.1-30 parts by weight of edible components selected from fat, garnish and combinations thereof; and
d) forming the paste into shaped articles by means of extrusion.

The inventors have further found that the liquid bridges that are formed within the savoury concentrate in the present process, retain their structuring effect at elevated temperatures. Thus, whereas conventional shaped savoury concentrates that derive their rigidity from the presence of fat lose their shape retention capability when the concentrate is heated to high temperatures (due to fat melting), the savoury concentrates according to the present invention retain shape at these high temperatures.

Thus, the present invention also provides an extruded shaped savoury concentrate having a water activity of less than 0.8 and comprising:
- 30-80 wt.% of edible salt selected from sodium chloride, potassium chloride and combinations thereof;
- 2.4-50 wt.% of one or more particulate ingredients selected from sugars, glutamate, flour, starch, plant pieces and combinations thereof;
- 0.1-8 wt.% of polar fluid selected from water, liquid polyols, ethanol and combinations thereof;
- 10-35 wt.% of fat, said fat comprising at least 30 wt.% of vegetable oil;
- 0-5 wt.% of maltodextrin;
wherein the combination of the edible salt and the one or more particulate ingredients constitutes at least 60 wt.% of the savoury concentrate, and wherein cubes of the savoury concentrate with dimensions 11 mm x24 mm x28 mm retain shape when placed in a hot air circulation oven at 125°C for 3 minutes.

### Detailed description of the invention

A first aspect of the invention relates to a process of preparing a shaped savoury concentrate having a water activity of less than 0.8, and a total fat content of 10-35 wt.%, said process comprising:
a) combining the following ingredients to prepare a fat containing powder mixture:
   - 100 parts by weight of edible salt selected from sodium chloride, potassium chloride and combinations thereof,
   - 2-150 parts by weight of one or more particulate ingredients selected from sugars, glutamate, flour, starch, plant pieces and combinations thereof, and
   - 5-150 parts by weight of fat, said fat comprising at least 30 wt.% of vegetable oil and said fat being in a liquid state when it is combined the edible salt and the one or more particulate ingredients;
b) mixing 100 parts by weight of the fat containing powder mixture with 0.2-10 parts by weight of edible polar liquid to produce a paste;
c) optionally mixing 100 parts by weight of the paste with 0.1-30 parts by weight of edible components selected from fat, garnish and combinations thereof; and
d) forming the paste into shaped articles by means of extrusion.

A second aspect of the invention relates to an extruded shaped savoury concentrate having a water activity of less than 0.8 and comprising:
- 30-80 wt.% of edible salt selected from sodium chloride, potassium chloride and combinations thereof;
- 2.4-50 wt.% of one or more particulate ingredients selected from sugars, glutamate, flour, starch, plant pieces and combinations thereof;
- 0.1-8 wt.% of polar fluid selected from water, liquid polyols, ethanol and combinations thereof;
- 10-35 wt.% of fat, said fat comprising at least 30 wt.% of vegetable oil;
- 0-5 wt.% of maltodextrin;
wherein the combination of the edible salt and the one or more particulate ingredients constitutes at least 60 wt.% of the savoury concentrate, and wherein cubes of the savoury concentrate with dimensions 11 mm x24 mm x28 mm retain shape when placed in a hot air circulation oven at 125°C for 3 minutes.

The term "fat" as used herein refers to glycerides selected from triglycerides, diglycerides, monoglycerides, phosphoglycerides and combinations thereof. The fat can be liquid, solid or semi-solid at ambient temperature (20°C).

The solid fat content of fat at 20°C (N₂₀) or at other temperatures can suitably be determined using the method described in Animal and vegetable fats and oilsDetermination of solid fat content by pulsed NMR -- Part 1: Direct method - ISO 8292-1:2008.

In case the solid fat content of the total fat in the savoury concentrate is determined, this is typically done by first completely melting the fat in the savoury concentrate, subsequently cooling the molten fat from the savoury concentrate, in order to access the solid fat content of the total fat in the savoury concentrate at the required temperature.

The particle size distribution of salt and the particulate components that are employed in the present process can suitably be determined by means of laser light diffraction for dry powders, or alternatively by using a set of sieves with different mesh sizes. The particle size distribution of particulate ingredients within the present savoury concentrate may be determined with a combination of Synchrotron Radiation Micro-CT and cryo SEM combined with EDX spectroscopy, microscopy and image analysis.

### Savoury concentrate

The shaped savoury concentrate of the present invention is solid or semisolid, preferably solid at 20°C. Upon dilution with water, typically hot water, the savoury concentrate preferably forms a bouillon, broth, gravy or sauce. According to a particularly preferred embodiment, the savoury concentrate is a bouillon cube, most preferably an extruded bouillon cube.

The savoury concentrate typically has a unit weight between 1 and 50 g, more preferably between 2 and 25 g, even more preferably between 5 and 20 g, and most preferably between 6 and 15 g.

The water activity of the savoury concentrate preferably does not exceed 0.8. More preferably, the water activity of the concentrate lies in the range of 0.3 to 0.6, most preferably in the range of 0.35 to 0.5.

The combination of edible salt and the one or more particulate ingredients preferably constitutes at least 64 wt.% and most preferably 68-90 wt.% of the savoury concentrate.

Besides edible salt, the one or more particulate ingredients and the optional edible components, the savoury concentrate may suitably contain a variety of other edible ingredients. Examples of such ingredients include extracts of herbs or spices, meat extracts, flavours and colouring.

Preferably, the savoury concentrate comprises not more than 10 wt.% of other edible ingredients selected from extracts of herbs or spices, meat extracts, flavours and colouring. More preferably, the savoury concentrates comprises not more than 5 wt.%, most preferably not more than 2.5 wt.% of said other edible ingredients.

Preferably, the savoury concentrate comprises less than 2.5 wt.% of maltodextrin. More preferably the savoury concentrate comprises less than 1 wt.% of maltodextrin. Most preferably, the savoury concentrate comprises no maltodextrin.

As explained herein before, the savoury concentrate of the present invention has the special property that it retains its shape at high temperatures. According to a particularly preferred embodiment, cubes of the savoury concentrate with dimensions 11 mm x24 mm x28 mm retain shape when placed in a hot air circulation oven at 125°C for 3 minutes.

The savoury concentrate of the present invention preferably has a hardness within the range of 10-200 N. More preferably, the hardness of the savoury concentrate is within the range of 20-150 N, most preferably in the range of 30-100 N.

The hardness of the savoury concentrate may suitably be determined using the procedure described in the examples.

The shaped savoury concentrate of the present invention is preferably obtainable, more preferably obtained by the preparation process described herein.

### Edible salt

The edible salt that is used in accordance with the present invention is selected from sodium chloride, potassium chloride and combinations thereof. Preferably, sodium chloride represents at least 50 wt.%, more preferably at least 80 wt.% and most preferably at least 98 wt.% of said edible salt.

The edible salt is preferably employed in accordance with the invention preferably has a mass weighted average diameter in the range of 10-2000 µm, more preferably in the range of 100-1200 µm, and most preferably in the range of 200-800 µm.

Typically, at least 80 wt.% of the edible salt has a particle size in the range of 10-2000 µm. Even more preferably at least 80 wt.% of the edible salt has a particle size in the range of 50-1500 µm. Most preferably, at least 80 wt.% of the edible salt has a particle size in the range of 100-1000 µm.

The savoury concentrate preferably contains 32-70 wt.%, more preferably at least 34-60 wt.% and most preferably 35-50 wt.% of edible salt selected from sodium chloride, potassium chloride and combinations thereof. Most preferably, the edible salt is sodium chloride.

### Particulate ingredients

In the preparation of the fat containing powder mixture one or more particulate ingredients are combined with edible salt and fat. These particulate ingredients are selected from sugars, glutamate, flour, starch, plant pieces and combinations thereof. Preferably, these particulate ingredients are employed in an amount of 4 to 100 parts by weight, more preferably 4.5 to 40 parts by weight and most preferably 5 to 30 parts by weight.

Preferably, the sugars are selected from the group of monosaccharides, disaccharides and trisaccharides. More preferably, the sugars are sucrose.

According to a preferred embodiment, the one or more particulate ingredients employed in the preparation of the fat containing powder mixture include 0.5-50 parts by weight, more preferably 1-40 parts by weight and most preferably 5-35 parts by weight of glutamate.

In accordance with a further preferred embodiment the one or more particulate ingredients used in the present process include 1-75 parts by weight, more preferably 5-60 parts by weight and most preferably 10-50 parts by weight of starch component selected from flour, starch and combinations thereof. Preferably the starch in the starch component is native starch.

The one or more particulate ingredients employed in the process may advantageously include 1-15 parts by weight, more preferably 2-12 parts by weight and most preferably 3-10 parts by weight of plant pieces. Preferably, these plant pieces are dried plant pieces. Examples of plant pieces that may suitably be employed are spices, herbs, vegetables and combinations thereof.

Examples of herbs that may suitably be used include: dried parsley, dill, chive and/or coriander. Examples of suitable spices include: pepper, garlic, celery seed, fennel seed and/or coriander seed. Vegetables may be incorporated in the savoury concentrate for taste and garnish. Examples of dried vegetables that may be used include onions, carrots, bell pepper, spinach and/or leek.

The one or more particulate ingredients employed in the present process typically have a mass weighted average diameter of at least 10 µm, more preferably of 15-1000 µm and most preferably of 20-500 µm.

The one or more particulate ingredients typically represent 2.4-50 wt.%, more preferably 2.7-40 wt.% and most preferably 3-30 wt.% of the savoury composition.

### Fat

In a preferred embodiment of the present process 8-100 parts by weight of fat are used in the preparation of the fat containing powder mixture. More preferably, fat is employed in an amount of 10-80 parts by weight, most preferably in an amount of 12-50 parts by weight.

The fat that is employed in the preparation of the fat containing powder mixture preferably is a fat having a solid fat content at 20°C (N₂₀) of less than 60%, more preferably of less than 35% and most preferably of less than 20%.

The fat used to prepare the fat containing powder mixture typically has a solid fat content at 35°C (N₃₅) of less than 30%, more preferably of less than 15% and most preferably of 0%.

The SAFA content of the fat that is employed to prepare the fat containing powder mixture preferably does not exceed 60% by weight of the total amount of fatty acids. More preferably, said SAFA content does not exceed 40 wt.%, most preferably it does not exceed 20 wt.%.

According to a particularly preferred embodiment, the fat employed in the preparation of the fat containing powder mixture contains at least 50 wt.% vegetable oil, more preferably at least 80 wt.% of vegetable oil. Examples of vegetable oils that may be employed include sunflower oil, soybean oil, rapeseed oil, cottonseed oil, maize oil, olive oil, palm oil, palm kernel oil, coconut oil, fractions of these oils and combinations thereof.

The fat used to prepare the fat containing powder mixture preferably does not contain hydrogenated fat.

The fat used to prepare the fat containing powder mixture preferably has a melting temperature below 30 °C. More preferably, the fat used to prepare the fat containing powder mixture has a melting temperature below 25 °C.

The total fat content of the savoury concentrate preferably is in the range of 12 to 30 wt.%, more preferably of 14 to 25 wt.% and most preferably of 15 to 20 wt.%.

The total fat that is contained in the savoury concentrate preferably has a solid fat content at 20°C (N₂₀) of less than 60%, more preferably of less than 35% and most preferably of less than 20%. Preferably, the total fat that is contained in the savoury concentrate has a solid fat content at 20°C (N₂₀) of at least 2%, more preferably at least 10%.

The total fat in the savoury concentrate preferably has a solid fat content at 35°C (N₃₅) of less than 30%, more preferably of less than 15%. Preferably, the total fat that is contained in the savoury concentrate has a solid fat content at 35°C (N₃₅) of at least 1%, more preferably at least 5%.

### Edible polar liquid and polar fluid

In the present process 100 parts by weight of the fat containing powder mixture are preferably mixed with 0.3-8 parts by weight, more preferably 0.4-6 parts by weight and most preferably 0.5-4 parts by weight of edible polar liquid to produce a paste.

The edible polar liquid employed in the present process can be pure liquid or a mixture of liquids. The polar liquid may further contain one or more dissolved or dispersed components.

In accordance with one embodiment, the edible polar liquid contains 50-100 wt.%, more preferably 70-100 wt.% and most preferably 80-100 wt.% of fluid selected from water, liquid polyols, alcohols, sugar syrups and combinations thereof. Examples of liquid polyols that may be employed include glycerol and propylene glycol. Preferably, the edible polar liquid contains 50-100 wt.% water. More preferably the polar liquid contains 70-100 water, most preferably 90-100 wt.% water.

According to another preferred embodiment, the edible polar liquid contains 15-90 wt.% water and 10-85 wt.% of solute. The solute preferably contains at least 80 wt.% of sugars, salts, polysaccharides and combinations thereof. More preferably, the solute contains at least 80 wt.% of sugars. Preferably, these sugars are selected from the group of monosaccharides, disaccharides and trisaccharides.

According to yet another embodiment, the edible polar liquid is a single phase mixture of two or more edible polar liquids, e.g. of water and glycerol. Preferably, the single phase mixture contains at least 50 wt.% water.

The savoury concentrate preferably contains 0.2-8 wt.% of the polar fluid. More preferably, the concentrate contains 0.4-6 wt.%, most preferably 0.5-4 wt.% of the polar fluid.

The water content of the savoury concentrate preferably lies in the range of 0.1-6 wt.%, more preferably of 0.2-4 wt.% and most preferably of 0.3-3 wt.%.

### Optional edible components

In the present process the paste obtained by mixing the fat containing powder mixture with edible polar liquid is preferably mixed with edible components selected from fat, garnish and combinations thereof. Preferably, 100 parts by weight of said paste are mixed with 0.1-20 parts by weight, more preferably 1-15 parts by weight and most preferably 5-12 parts by weight of these edible components.

According to a particularly preferred embodiment, 100 parts by weight of the paste is mixed with at least 1 part by weight of molten fat, said fat having a solid fat content at 20°C (N₂₀) of at least 50%, more preferably of at least 60% and most preferably of 65%. The aforementioned fat preferably has a solid fat content at 35°C (N₃₅) of at least 10%, more preferably of at least 20% and most preferably in the range of 25-40%.

### Process

The preparation of the fat containing powder mixture in the present process may suitably be done in a mixing vessel, e.g. a Plough-shear type of mixer. Preferably, the edible salt and the one or more particulate ingredients are first introduced into the mixing vessel. Next, the fat is added. Preferably the fat is gradually added under stirring. The combination of edible salt, one or more particulate ingredients and fat that is formed in the mixing vessel typically has a temperature of 20-60°C, more preferably of 30-50°C.

The fat containing powder mixture obtained in the present process usually is of a smooth to coarse, sticky and malleable, paste-like consistency.

The fat containing powder mixture is preferably mixed with the edible polar liquid in a mixing vessel. Again, this may suitably be done in a Plough-shear type of mixer. Preferably the edible polar liquid is gradually added. The fat containing powder mixture preferably has a temperature in the range of 20-60°C, more preferably in the range of 30-50°C when the edible polar liquid is mixed with said powder mixture. The paste that is produced by the mixing of the fat containing powder mixture and the edible polar liquid is preferably pumpable or extrudable.

Optionally, edible components may be mixed with the paste. Also this process step may suitably be carried out in a Plough-shear, Double Helix or Z-arm type of mixer.

The paste, optionally after admixing of the edible components, is preferably formed into shaped articles having a weight of 1 to 50 grams. Extruded shaped articles, such as cubes, can be prepared by compacting a portion of the paste in a mould that is open at one side. Known equipment from Corazzas™ or Benhills™ can be used to prepare extruded shaped articles. The paste is preferably extruded at an exit temperature in the range of 20-60°C, more preferably in the range of 25-45°C.

### Use

A further aspect of the invention relates to the use of the shaped savoury concentrate of the present invention in the preparation of foodstuffs, said use comprising combining said savoury concentrate with hot aqueous liquid. Examples of foodstuffs that may suitably be prepared using the savoury concentrate include soups, bouillons, sauces and gravies

The invention is further illustrated by the following non-limiting examples.

### Examples

### Example 1

Savoury concentrates were produced according to the recipe provided in Table 1:

**Table 1**

| **Ingredients** | **Wt %** |
|---|---|
| Sodium chloride (Dv(0.1)=266 µm; Dv(0.5)=462 µm; Dv(0.9)=763 µm)¹ | 39.0 |
| Monosodium glutamate (32 mesh) | 13.2 |
| Spice mix | 9.3 |
| Wheat flour (Dv(0.1)=13 µm; Dv(0.5)=59 µm; Dv(0.9)=157 µm)¹ | 10.0 |
| Glutinous rice flour (Dv(0.1)=10 µm; Dv(0.5)=39 µm; Dv(0.9)=115 µm)¹ | 7.0 |
| Palm olein (N₂₀<15%, N₃₅ < 1%) | 10.0 |
| Water | 1.5 |
| Dry fractionated palm stearin (N₂₀=60-70%, N₃₅=32-40%) | 10.0 |

| | |
|---|---|
| ¹Determined with laser light diffraction (Mastersizer 2000 (Malvern) with an accessory for powders) | |

All dry particulate components were charged into a Plough-shear type of mixer (Lödige, Germany) and mixed at 180 rpm for 2 minutes until fully homogeneous. In the next step, the palm olein was added at 70°C and mixed in for another two minutes with choppers on, until the liquid was fully divided over the dry ingredients.

In the next step, the water was added and mixed for another 2 minutes with choppers on. Hereafter, the palm stearin was added in molten form at a temperature of 70°C and the resulting paste was mixed for another 2 minutes with choppers on. After the mixing the paste had a temperature of 45 °C.

When the paste cooled down to 30 °C it was transferred to a Corazza FD220 type of extruder of which the hopper was smeared with palm stearin prior to the extrusion to ensure good friction between the paste and the hopper surface. The paste was extruded into cubes (11 mm x24 mm x28 mm, 10+/- 0.1 grams) and packaged into wrapper foil.

As a comparative experiment another paste was prepared using the recipe provided in Table 1. In this comparative experiment the order of addition of the liquid components of the recipe was reversed as follows:
All dry components were charged into a Plough-shear type of mixer (Lödige, Germany) and mixed at 180 rpm for 2 minutes until fully homogeneous. In the next step, the water was added and mixed in for another two minutes, with choppers on, until the liquid was fully divided over the dry ingredients.

In the next step, the palm olein was added at 70°C and mixed for another 2 minutes with choppers on. Hereafter, the palm stearin was added in molten form at a temperature of 70°C and the resulting paste was mixed for another 2 minutes with choppers on.

The paste temperature after the mixing was 45 °C. When the paste cooled down to 30 °C it was transferred to a Corazza FD220 type of extruder of which the hopper was smeared with palm stearin prior to the extrusion to ensure good friction between the paste and the hopper surface. An attempt to extrude it was performed. The extruder was immediately blocked by the paste and the machine had to be stopped and cleaned.

### Example 2

A savoury concentrate was produced according to the recipe provided in Table 2.

**Table 2**

| **Ingredients** | **Wt %** |
|---|---|
| Sodium chloride (Dv(0.1)=266 µm; Dv(0.5)=462 µm; Dv(0.9)=763 µm)¹ | 40.6 |
| MSG (32 mesh) | 13.8 |
| Spice mix | 9.7 |
| Wheat flour (Dv(0.1)=13 µm; Dv(0.5)=59 µm; Dv(0.9)=157 µm)¹ | 10.4 |
| Glutinous rice flour (Dv(0.1)=10 µm; Dv(0.5)=39 µm; Dv(0.9)=115 µm)¹ | 7.3 |
| Sunflower oil | 8.3 |
| Glucose syrup (DE28, 21% moisture) | 1.6 |
| Palm stearin (N₂₀=60-70%, N₃₅=32-40%) | 8.3 |

| | |
|---|---|
| ¹ Determined with laser light diffraction (Mastersizer 2000 (Malvern) with an accessory for powders) | |

All dry components were charged into a Plough-shear type of mixer (Lödige, Germany) and mixed at 180 rpm for 2 minutes until fully homogeneous. In the next step, the sunflower oil was added and mixed in for another two minutes, with choppers started 30 s later, until the liquid was fully divided over the dry ingredients.

In the next step, the glucose syrup was added and mixed for another 2 minutes with choppers on. Hereafter, the palm stearin was added in molten form at a temperature of 70°C and the resulting paste was mixed for another 2 minutes with choppers on. The paste temperature after the mixing was 41 °C. When the paste cooled down to 29°C it was transferred to a Corazza FD220 type of extruder and was extruded into cubes (11 mm x24 mm x28 mm, 10 grams) and packaged into wrapper foil.

The heat stability of the bouillon cubes so prepared was compared with that of a commercially available bouillon cube product of the same dimensions and weight. To assess their heat stability, the cubes were unwrapped and put into a hot air circulation oven set at 125+/-1°C. Texture, oil retention and shape stability were assessed directly before and after the different oven times. These results are summarized in Table 3.

**Table 3**

| **Product** | **Oven time (min.)** | **Texture** | **Oil Retention** | **Shape retention** |
|---|---|---|---|---|
| Invention product | 0 | Pasty | Yes | Yes |
| | 3 | Crumbly | Yes | Yes |
| Commercial product ¹ | 0 | Pasty | Yes | Yes |
| | 3 | Hard, fatty | No | No |

| | | | | |
|---|---|---|---|---|
| ¹ Extruded bouillon cube comprising about 25 wt.% of solid fat | | | | |

### Example 3

A bouillon mix was produced according to the recipe provided in Table 4.

**Table 4**

| **Ingredients** | **Wt %** |
|---|---|
| Salt | 41.5 |
| Monosodium glutamate (32 mesh) | 16.0 |
| Spice mix | 6.5 |
| Wheat Flour type 550 | 9.9 |
| Glutinous Rice Flour | 5.9 |
| Sunflower Oil | 18.7 |
| Water | 1.5 |

All dry components were put into the bowl of a kitchen mixer (Kenwood Classic Chef KM336) and mixed at low speed (position 1 of the dial) using the Chef sized flexible beater for 5 minutes until fully homogeneous. In the next step, sunflower oil was poured within 30 s in the bowl of the mixer and mixed in for another five minutes until the liquid was fully divided over the dry ingredients. In the next step, the water was added and mixed for another 5 minutes.

Bouillon cubes were prepared from this bouillon mix by transferring twenty 10 g portions into a metal grid having 4×5 rectangular compartments positioned over a flat metal plate. The dimensions of each rectangular compartment were as follows: length 27.8 mm, width 24.0 mm, and depth 24.0 mm. After the portions had been transferred into the rectangular compartments, they were covered with another metal plate with protruding rectangular studs, which tightly fit into the holes of the metal grid and can be displaced vertically. The arrangement of bottom plate, rectangular grid filled with bouillon cube portions and the cover plate were positioned on top of the bottom plate of an electromechanical materials testing system (Instron 5567, Instron Corp.). Subsequently, the upper plate of the materials testing system was lowered until the total force exerted on the cube mix reached 8.0 kN. Next, the upper plate of the Instron apparatus was raised, the arrangement of bottom plate, rectangular grid with the already pressed cubes, and the cover plate were removed from the bottom plate of the Instron apparatus, turned upside down, and placed on a flat surface. The flat plate which covered compartments was removed by sliding it sideways. The rectangular grid was pressed downwards by hand onto the rectangular metal stud, leaving the freshly pressed bouillon cubes on top of the flat surface. The cubes were gently pushed sideways with a spatula and then collected into a plastic container with a tightly fitting lid.

The collected cubes were subjected to a number of analytical tests as described herein below. The results are shown in Table 5.

**Table 5**

| **Parameter** | **Value** |
|---|---|
| Hardness (in N) | 7.4 ± 1.3 |
| Water Activity | 0.586 ± 0.002 |
| Dissolution time (in sec.) | 22.7 ± 1.5 |

These results show that the characteristics of these bouillon cubes are very similar to those of commercially available bouillon cubes.

The hardness of bouillon cubes was measured using a Texture analyser (TA XT Plus ex Stable Microsystems) equipped with a cylindrical probe having a diameter of ½ inch. A bouillon cube (dimensions 11.5 * 24 * 28 mm) was positioned horizontally under the probe, with the centre of the cube in the horizontal plane coinciding with the centre of the probe. The cube was compressed by lowering the probe at a constant speed of 0.5 mm/s over a distance of 3mm after touching the top surface. During compression, the force experience by the probe is measured. The hardness is defined as the maximum force that is encountered, expressed in Newton (N). Measurements were carried out tenfold.

Water activity was determined using an Aqualab Lite device. A portion of the bouillon cubes was crushed and divided on a plastic cup, brought into the device and the water activity was measured in fourfold.

## Claims

1. A process of preparing a shaped savoury concentrate having a water activity of less than 0.8 and a total fat content of 10-35 wt.%, said process comprising:
a) combining the following ingredients to prepare a fat containing powder mixture:
• 100 parts by weight of edible salt selected from sodium chloride, potassium chloride and combinations thereof,
• 2-150 parts by weight of one or more particulate ingredients selected from sugars, glutamate, flour, starch, plant pieces and combinations thereof, and
• 5-150 parts by weight of fat, said fat comprising at least 30 wt.% of vegetable oil and said fat being in a liquid state when it is combined with the edible salt and the one or more particulate ingredients;
b) mixing 100 parts by weight of the fat containing powder mixture with 0.2-10 parts by weight of edible polar liquid to produce a paste;
c) optionally mixing 100 parts by weight of the paste with 0.1-30 parts by weight of edible components selected from fat, garnish and combinations thereof; and
d) forming the paste into shaped articles by means of extrusion.

2. Process according to claim 1, wherein the edible salt has a mass weighted average diameter in the range of 10-2000 µm.

3. Process according to claim 1 or 2, wherein the fat that is combined with the edible salt and the one or more particulate ingredients has a solid fat content at 20°C (N₂₀) of less than 60%.

4. Process according to any one of the preceding claims, wherein the polar liquid contains 20-100 wt.% of fluid selected from water, liquid polyols, ethanol and combinations thereof.

5. Process according to any one of the preceding claims, wherein the 3-100 parts by weight of one or more particulate ingredients include 0.5-50 parts by weight of glutamate.

6. Process according to any one of the preceding claims, wherein the 3-100 parts by weight of one or more particulate ingredients include 1-75 parts by weight of starch components selected from flour, starch and combinations thereof.

7. Process according to any one of the preceding claims, wherein 100 parts by weight of the paste is mixed with at least 1 part by weight of molten fat, said fat having a solid fat content at 20°C (N₂₀) of at least 50%.

8. Process according to any one of the preceding claims, wherein the fat containing powder has a temperature of 20-60°C when it is mixed with the edible polar liquid.

9. Process according to any one of the preceding claims, wherein the paste is formed into shaped articles having a weight of 1 to 50 grams.

10. Process according to any one of the preceding claims, wherein the paste is extruded at an exit temperature in the range of 25-45°C.

11. An extruded shaped savoury concentrate having a water activity of less than 0.8 and comprising:
• 30-80 wt.% of edible salt selected from sodium chloride, potassium chloride and combinations thereof;
• 2.4-50 wt.% of one or more particulate ingredients selected from sugars, glutamate, flour, starch, plant pieces and combinations thereof;
• 0.2-8 wt.% of polar fluid selected from water, liquid polyols, ethanol and combinations thereof;
• 10-35 wt.% of fat, said fat comprising at least 30 wt.% of vegetable oil;
• 0-5 wt.% of maltodextrin;
wherein the combination of edible salt and the one or more particulate ingredients constitutes at least 60 wt.% of the savoury concentrate, and wherein cubes of the savoury concentrate with dimensions 11 mm x24 mm x28 mm retain shape when placed in a hot air circulation oven at 125°C for 3 minutes.

12. Savoury concentrate according to claim 11, wherein the fat has a solid fat content at 20°C (N₂₀) of less than 60% and a solid fat content at 35°C (N₃₅) of less than 30%.

13. Savoury concentrate according to claim 11 or 12, wherein the fat has a solid fat content at 20°C (N₂₀) of at least 2% and a solid fat content at 35°C (N₃₅) of at least 1%.

14. Savoury concentrate according to any one of claims 11-13, wherein the savoury concentrate contains 0.2-4 wt.% water.

15. Savoury concentrate according to any one of claims 11-14, wherein the savoury concentrate is obtained by a process according to any one of claims 1-10.

## Patentansprüche

1. Verfahren zur Herstellung eines geformten herzhaften Konzentrats, das eine Wasseraktivität von weniger als 0,8 und einen Gesamtfettgehalt von 10-35 Gew.-% aufweist, wobei das Verfahren umfasst:
a) Kombinieren der folgenden Zutaten, um eine Fett enthaltende Pulvermischung herzustellen:
• 100 Gewichtsteile essbares Salz, ausgewählt unter Natriumchlorid, Kaliumchlorid und Kombinationen davon,
• 2-150 Gewichtsteile einer oder mehrerer teilchenförmiger Zutaten, ausgewählt unter Zuckern, Glutamat, Mehl, Stärke, Pflanzenstücken und Kombinationen davon, und
• 5-150 Gewichtsteile Fett, wobei das Fett mindestens 30 Gew.-% Pflanzenöl umfasst und das Fett in flüssigem Zustand vorliegt, wenn es mit dem essbaren Salz und einer oder mehreren teilchenförmigen Zutaten kombiniert wird;
b) Mischen von 100 Gewichtsteilen der Fett enthaltenden Pulvermischung mit 0,2-10 Gewichtsteilen essbarer polarer Flüssigkeit, um eine Paste herzustellen;
c) optional Mischen von 100 Gewichtsteilen der Paste mit 0,1-30 Gewichtsteilen essbarer Bestandteile, ausgewählt unter Fett, Garnitur und Kombinationen davon; und
d) Formen der Paste zu Formkörpern mittels Extrusion.

2. Verfahren nach Anspruch 1, wobei das essbare Salz einen massengewichteten Durchschnittsdurchmesser in dem Bereich von 10-2000 µm aufweist.

3. Verfahren nach Anspruch 1 oder 2, wobei das Fett, das mit dem essbaren Salz und der einen oder den mehreren teilchenförmigen Zutaten kombiniert wird, einen Festfettgehalt bei 20°C (N₂₀) von weniger als 60% aufweist.

4. Verfahren nach irgendeinem der vorhergehenden Ansprüche, wobei die polare Flüssigkeit 20-100 Gew.-% Flüssigkeit, ausgewählt unter Wasser, flüssigen Polyolen, Ethanol und Kombinationen davon, enthält.

5. Verfahren nach irgendeinem der vorhergehenden Ansprüche, wobei die 3-100 Gewichtsteile der einen oder der mehreren teilchenförmigen Zutaten 0,5-50 Gewichtsteile Glutamat enthalten.

6. Verfahren nach irgendeinem der vorhergehenden Ansprüche, wobei die 3-100 Gewichtsteile der einen oder der mehreren teilchenförmigen Zutaten 1-75 Gewichtsteile Stärkekomponenten, ausgewählt unter Mehl, Stärke und Kombinationen davon, enthalten.

7. Verfahren nach irgendeinem der vorhergehenden Ansprüche, worin 100 Gewichtsteile der Paste mit mindestens 1 Gewichtsteil geschmolzenen Fetts gemischt werden, wobei das Fett einen Festfettgehalt bei 20°C (N₂₀) von mindestens 50% aufweist.

8. Verfahren nach irgendeinem der vorhergehenden Ansprüche, wobei das Fett enthaltende Pulver eine Temperatur von 20-60°C aufweist, wenn es mit der essbaren polaren Flüssigkeit gemischt wird.

9. Verfahren nach irgendeinem der vorhergehenden Ansprüche, wobei die Paste zu Formkörpern geformt wird, die ein Gewicht von 1 bis 50 Gramm aufweisen.

10. Verfahren nach irgendeinem der vorhergehenden Ansprüche, wobei die Paste mit einer Ausgangstemperatur in dem Bereich von 25-45°C extrudiert wird.

11. Extrudiertes geformtes herzhaftes Konzentrat, das eine Wasseraktivität von weniger als 0,8 aufweist und umfasst:
• 30-80 Gew.-% essbares Salz, ausgewählt unter Natriumchlorid, Kaliumchlorid und Kombinationen davon;
• 2,4-50 Gew.-% einer oder mehrerer teilchenförmiger Zutaten, ausgewählt unter Zuckern, Glutamat, Mehl, Stärke, Pflanzenstücken und Kombinationen davon;
• 0,2-8 Gew.-% polare Flüssigkeit, ausgewählt unter Wasser, flüssigen Polyolen, Ethanol und Kombinationen davon;
• 10-35 Gew.-% Fett, wobei das Fett mindestens 30 Gew.-% Pflanzenöl umfasst;
• 0-5 Gew.-% Maltodextrin;
wobei die Kombination von essbarem Salz und der einen oder mehreren teilchenförmigen Zutaten mindestens 60 Gew.-% des herzhaften Konzentrats bildet und wobei Würfel des herzhaften Konzentrats mit Dimensionen 11 mm x 24 mm x 28 mm ihre Form beibehalten, wenn sie in einen Ofen mit Heißluftzirkulation bei 125°C 3 Minuten lang gelegt werden.

12. Herzhaftes Konzentrat nach Anspruch 11, wobei das Fett einen Festfettgehalt bei 20°C (N₂₀) von weniger als 60% und einen Festfettgehalt bei 35°C (N₃₅) von weniger als 30% aufweist.

13. Herzhaftes Konzentrat nach Anspruch 11 oder 12, wobei das Fett einen Festfettgehalt bei 20°C (N₂₀) von mindestens 2% und einen Festfettgehalt bei 35°C (N₃₅) von mindestens 1% aufweist.

14. Herzhaftes Konzentrat nach irgendeinem der Ansprüche 11-13, wobei das herzhafte Konzentrat 0,2-4 Gew.-% Wasser enthält.

15. Herzhaftes Konzentrat nach irgendeinem der Ansprüche 11-14, wobei das herzhafte Konzentrat durch ein Verfahren nach irgendeinem der Ansprüche 1-10 erhalten wird.

## Revendications

1. Procédé de préparation d'un concentré savoureux façonné présentant une activité d'eau inférieure à 0,8 et une teneur totale en graisse de 10-35 % en masse, ledit procédé comprenant :
a) la combinaison des ingrédients suivants pour préparer un mélange de poudre contenant de la graisse :
. 100 parties en masse de sel comestible choisi parmi le chlorure de sodium, le chlorure de potassium et des combinaisons de ceux-ci,
. 2-150 parties en masse d'un ou plusieurs ingrédients particulaires choisis parmi des sucres, du glutamate, de la farine, de l'amidon, des morceaux de plantes et des combinaisons de ceux-ci, et
. 5-150 parties en masse de graisse, ladite graisse comprenant au moins 30 % en masse d'huile végétale et ladite graisse étant dans un état liquide lorsqu'elle est combinée avec le sel comestible et les uns ou plusieurs ingrédients particulaires ;
b) le mélange de 100 parties en masse du mélange de poudre contenant de la graisse avec 0,2-10 parties en masse de liquide polaire comestible pour produire une pâte ;
c) le mélange éventuel de 100 parties en masse de la pâte avec 0,1-30 parties en masse de constituants comestibles choisis parmi de la graisse, une garniture et des combinaisons de ceux-ci ; et
d) la transformation de la pâte en articles façonnés au moyen d'une extrusion.

2. Procédé selon la revendication 1, dans lequel le sel comestible présente un diamètre moyen pondéré en masse dans l'intervalle de 10-2 000 µm.

3. Procédé selon la revendication 1 ou 2, dans lequel la graisse qui est combinée avec le sel comestible et les uns ou plusieurs ingrédients particulaires présente une teneur en graisse solide à 20°C (N₂₀) inférieure à 60 %.

4. Procédé selon l'une quelconque des revendications précédentes, dans lequel le liquide polaire contient 20-100 % en masse de fluide choisi parmi l'eau, des polyols liquides, l'éthanol et des combinaisons de ceux-ci.

5. Procédé selon l'une quelconque des revendications précédentes, dans lequel les 3-100 parties en masse d'un ou plusieurs ingrédients particulaires comprennent 0,5-50 parties en masse de glutamate.

6. Procédé selon l'une quelconque des revendications précédentes, dans lequel les 3-100 parties en masse d'un ou plusieurs ingrédients particulaires incluent 1-75 parties en masse de constituants d'amidon choisis parmi la farine, l'amidon et des combinaisons de ceux-ci.

7. Procédé selon l'une quelconque des revendications précédentes, dans lequel 100 parties en masse de la pâte sont mélangées avec au moins 1 partie en masse de graisse fondue, ladite graisse présentant une teneur en graisse solide à 20°C (N₂₀) d'au moins 50 %.

8. Procédé selon l'une quelconque des revendications précédentes, dans lequel la poudre contenant de la graisse présente une température de 20-60°C lorsqu'elle est mélangée avec le liquide polaire comestible.

9. Procédé selon l'une quelconque des revendications précédentes, dans lequel la pâte est façonnée en articles façonnés ayant une masse de 1 à 50 grammes.

10. Procédé selon l'une quelconque des revendications précédentes, dans lequel la pâte est extrudée à une température de sortie dans l'intervalle de 25-45°C.

11. Concentré savoureux façonné extrudé présentant une activité d'eau inférieure à 0,8 et comprenant :
. 30-80 % en masse de sel comestible choisi parmi le chlorure de sodium, chlorure de potassium et combinaisons de ceux-ci,
. 2,4-50 % en masse d'un ou plusieurs ingrédients particulaires choisis parmi des sucres, du glutamate, de la farine, de l'amidon, des morceaux de plantes et des combinaisons de ceux-ci,
. 0,2-8 % en masse de fluide polaire choisi parmi l'eau, des polyols liquides, l'éthanol et des combinaisons de ceux-ci ;
. 10-35 % en masse de graisse, ladite graisse comprenant au moins 30 % en masse d'huile végétale ;
. 0-5 % en masse de maltodextrine ;
dans lequel la combinaison de sel comestible et des un ou plusieurs ingrédients particulaires constituent au moins 60 % en masse du concentré savoureux, et dans lequel des cubes de concentré savoureux avec des dimensions de 11 mm x 24 mm x 28 mm conservent la forme lorsqu'ils sont placés dans un four à circulation d'air chaud à 125°C pendant 3 minutes.

12. Concentré savoureux selon la revendication 11, dans lequel la graisse présente une teneur en graisse solide à 20°C (N₂₀) inférieure à 60 % et une teneur en graisse solide à 35°C (N₃₅) inférieure à 30 %.

13. Concentré savoureux selon la revendication 11 ou 12, dans lequel la graisse présente une teneur en graisse solide à 20°C (N₂₀) d'au moins 2 % et une teneur en graisse solide à 35°C (N₃₅) d'au moins 1 %.

14. Concentré savoureux selon l'une quelconque des revendications 11-13, dans lequel le concentré savoureux contient 0,2-4 % en masse d'eau.

15. Concentré savoureux selon l'une quelconque des revendications 11-14, dans lequel le concentré savoureux est obtenu par un procédé selon l'une quelconque des revendications 1-10.
